# EUROPEAN PATENT SPECIFICATION

(11) **EP 0 519 909 B1**
(45) Date of publication and mention of the grant of the patent: **15.02.1995**
(21) Application number: 89912453.1
(22) Date of filing: 20.11.1989
(51) Int. Cl.: B65H 23/06, G03B 1/00

(54) **ROLL BRAKE**
BREMSVORRICHTUNG FÜR ROLLER
FREIN POUR ROULEAU

(30) Priority: 21.11.1988 FI 885386
(43) Date of publication of application: 30.12.1992
(73) Proprietor: HAUTIO, Heino, SF-61800 Kauhajoki (FI)
(72) Inventor: HAUTIO, Heino, SF-61800 Kauhajoki (FI)
(74) Representative: Hoffmeister, Helmut, Dr. Dipl.-Phys.
(86) International application number: FI8900212
(87) International publication number: WO9005690

(56) References cited:
- US-A- 1 465 584
- US-A- 2 724 065
- US-A- 2 724 065
- US-A- 2 911 550
- US-A- 3 180 548
- US-A- 4 418 994
- US-A- 4 418 994

## Description

The present invention relates to a roll brake particularly for braking a film and/or a film roller when pulling a film out of a film roller. (US-A-3 180 548 and 4 418 994)
The currently available roll brakes include a brake and a rotation sensor mounted outside the braking roll. A drawback in such prior known brake systems is that a brake mounted outside a roll and its associated transmission require space outside the brake roll. In addition, being small in size relative to their braking power, they overheat in continuous operation, change in their braking characteristics and have short service lives. The installation of a separate rotation sensor is also often troublesome and, furthermore, such devices do not indicate the uncoupling of a brake.

An object of the invention is to provide a roll brake capable of eliminating the above drawbacks.

A particular further object of the invention is to provide a roll brake, wherein the braking power is in a desired manner dependent on the speed of rotation. This is important especially when using the roll brake in film wrapping machines as a roll decelerating the pulling of a film. If the film being pulled begins to stretch and, as a result of this, the speed of rotation slows down, the braking power must diminish in order to avoid the breaking of a film.

These objects of the invention are accomplished on the basis of the characterizing features of the invention set out in the annexed claims.

One embodiment and a few of its practical applications of the invention will now be described in more detail with reference made to the accompanying drawings, in which
- fig. 1: shows a roll brake of the invention in a cross-section and
- fig. 2: shows the same in a longitudinal section.
- Fig. 3: shows a practical embodiment of the invention when pulling a film out of a film roller having its axis of rotation in a horizontal position.
- Fig. 4: shows a practical embodiment of the invention when pulling a film out of a film roller having its axis of rotation in a vertical position and
- fig. 5: shows a further embodiment when pulling a film out of a film roller having its axis of rotation in a vertical position while rotating the film roller and its associated brake roll around one axis of rotation.
- Fig. 6: is a schematical plan view of a film wrapping machine for wrapping a film 12 around a roller of stock 17 by means of an assembly shown in fig. 4 or fig. 5.
- Fig. 7: shows in association with fig. 6 the next film wrapping stage for wrapping a film 12 around a roller of stock 17 by rotating the roller of stock around its axis. This makes it possible to employ the assembly of fig. 3.

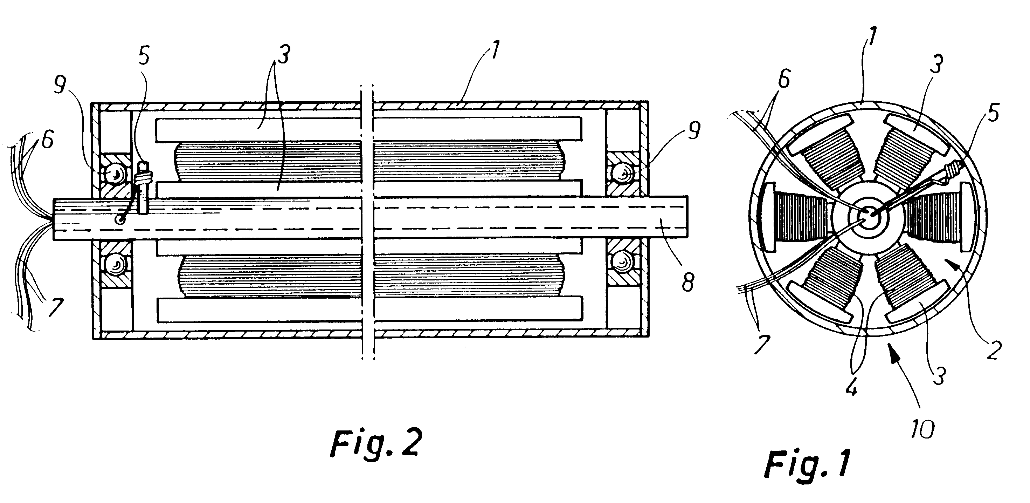

A decelerating roll or a roll brake shown in figs. 1 and 2 comprises a steel roll jacket 1, rotatably journalled on a shaft 8 with bearings 9. Inside the roll jacket 1, said shaft 8 carries a non-rotatable multipolar stator 2. The stator poles are provided with excitation windings 4 into which a magnetization current is delivered by means of conductors 6. The magnetization current source can be a 0 - 240 V alternating current source or also a 0 - 230 V. If necessary, the excitation voltage can be adjustable.

The dimensioning of a stator 2 is dependent on the length, diameter, necessary braking power of a required brake roll and on the desired variation of braking force as a function of the speed of rotation. The thickness of steel roll jacket 1 is 2 mm or more according to a particular application. During the rotation of roll jacket 1, the stator produces a magnetic field for creating eddy currents in jacket 1, said eddy currents heating the jacket 1 and the power spent therefor producing a braking force which resists the rotation of roll 1. The magnitude of a braking force is dependent on the strength of a magnetization current and the design and dimensions of stator 2. The more poles included in a stator, the lower a speed of rotation required for producing a given braking force. The smaller an air gap between poles 3 and jacket 1, the stronger a braking force at a given speed of rotation.

Selection of the axial length of stator poles 3 relative to the length of roll jacket 1 has an effect on how the braking force depends on the speed of rotation. When the length of roll jacket 1 suitably exceeds that of poles 3, there will be a free zone left at the ends of a roll jacket for allowing the passage of eddy currents.

When the roll ends are provided with a sufficient vacant zone for eddy currents, there will be produced a braking force which increases as the speed of rotation increases. This offers a major advantage e.g. when using the brake in a film wrapping machine, wherein the film is decelerated to a certain tension. Due to manufacturing, however, the film will contain spots of reduced thickness, which means that the film can be broken by a braking force weaker than that used for wrapping. As the film begins to stretch between a brake and a parcel being wrapped, the speed of rotation of a roll brake decelerates thus diminishing the braking force and preventing the breakage of a film for this reason. The longer said poles 3 are designed relative to the length of roll jacket 1, the lesser the effect that any speed of rotation has on the braking force. Hence, a braking force substantially independent of a speed of rotation can be obtained this way. This is due to the fact that, with the above dimensioning, the short-circuit current rapidly reaches its maximum value which it cannot exceed, and a consequence of this is that the braking force cannot exceed a certain level.

It should further be appreciated that the dissipation heat generated in a roll brake transfers effectively from a brake roll to a material to be decelerated. When using a roll brake in film wrapping machine, the heating of a film improves its wrapping qualities.

Adjacent to the end of roll jacket 1 is mounted a rotation sensor coil 5 which is provided with a low alternating voltage produced by a magnetic field induced by eddy currents travelling within the end zone of said roll jacket. When the rotation of roll jacket 1 is stopped or the magnetization current is cut off, the voltage received from sensor coil 5 is also cut off in wires 7. The alternating voltage received from wires 7 can be carried in a rectified state to a transistor amplifier that can be used for controlling the relay action. This rotation sensing signal can also be used for controlling an excitation voltage regulating means. The transistor amplifier along with its relay can be mounted in connection with the excitation voltage regulating means which, when built in the relay housing, provides a readily replaceable unit.

In the currently available film wrapping machines, the decelerating roll does not bear against a roller of film, which means that a brake is also required for a roller of film. Its braking action is troublesome as the roller radius changes continuously, whereby the braking force must also diminish as the roller diminishes in size. The control device will be complicated.

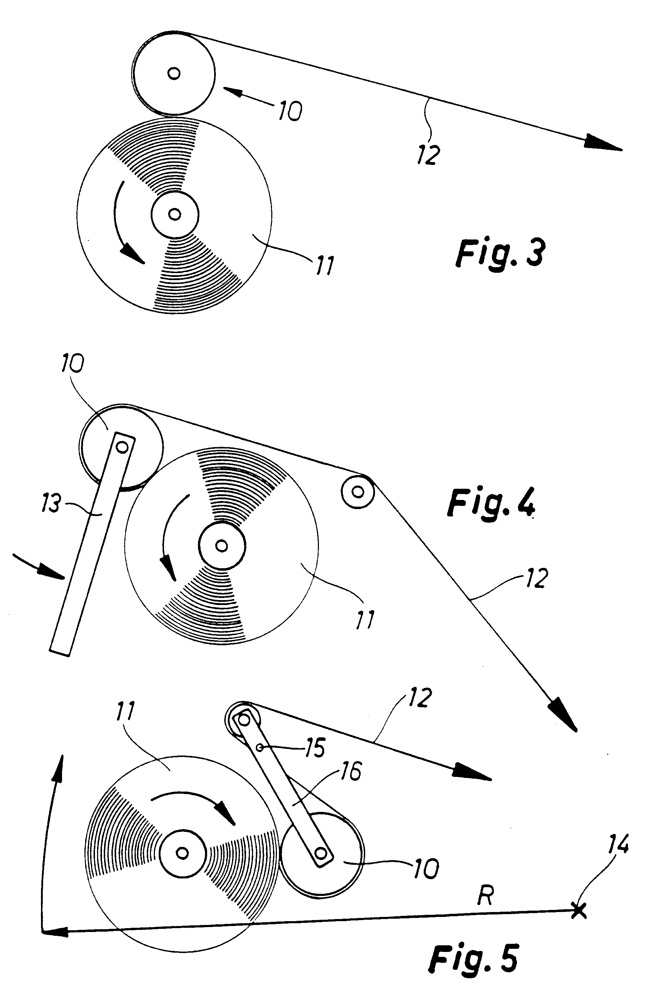

Figs. 3-5 illustrate the application of a roll brake of the invention in a manner that the roll brake also effects the deceleration of a film roller 11. The braking force diminishes as as the speed of unfolding becomes slower. At the end of a wrapping operation, the force for stopping the roller is produced by passing to the roll brake for a few seconds a sufficient excitation voltage for producing a braking force sufficient for stopping.

In the case of fig. 3, a film 12 is pulled out of a film roller 11 around a roll brake 10 while said roll brake 10 bears against the film roller 11 with its dead weight. This arrangement provides a sufficient friction both between roll brake 10 and film 12 and between roll brake 10 and film roller 11. No separate brake is needed on the shaft of roller 11.

In the case of fig. 4, a roll brake 10 is pivotably journalled at the end of a lever arm 13 whereby the tensional force of a film 12 urges said roll brake 10 against a film roller 11. Of course, it is also possible to employ a spring but its use involves other problems.

In the case of fig. 5, a roll brake 10 is so positioned relative to a roller 11 at the end of a lever arm 16 pivotable around an axle 15 that, as the entire system is rotated around an axis 14, a centrifugal force urges said roll brake 10 against film roller 11.

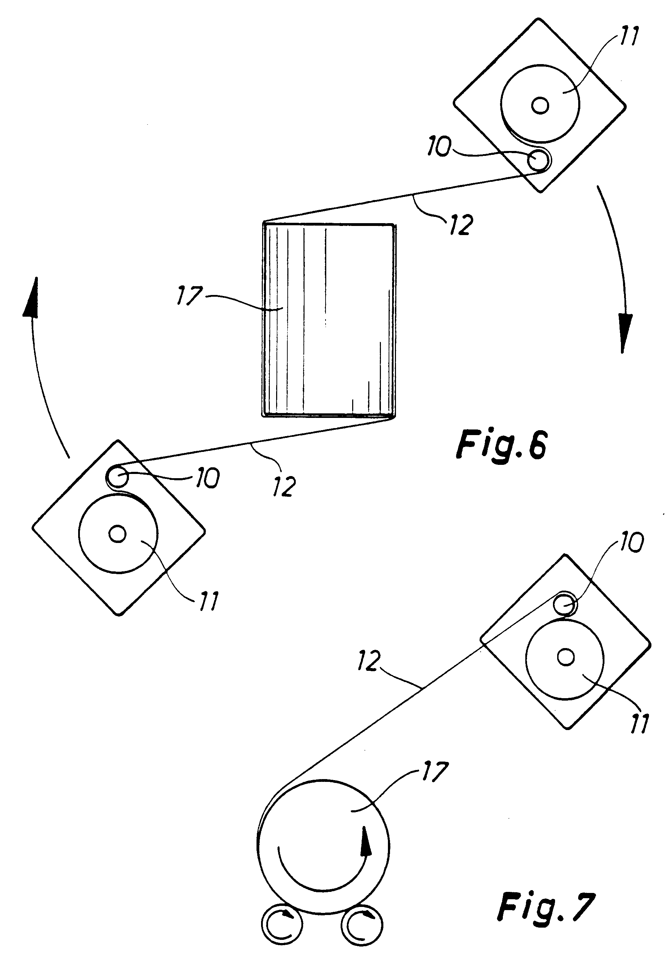

In the case of fig. 6, a film 12 is wrapped around a roller of stock 17, the wrapping taking place in a horizontal plane while rotating said roller of stock 17 slowly around its horizontal axis. A roll brake 10 is arranged in connection with a film roller 11 as shown in either fig. 4 or in fig. 5.

In the case of fig. 7, a film 12 is wrapped around a roller of stock 17 in the peripheral direction whereby a brake roll 10 is arranged in connection with a film roller 11 as shown in fig. 3. The wrapping operation shown in figs. 6 and 7 is carried out in successive wrapping machines included in a wrapping apparatus.

When using a roll brake of the invention, the start and finish of film pulling can take place with the brake coupled on since the braking force at a low date of pulling is small with respect to the actual rate of wrapping. During a wrapping operation, the unfolding rate of film is appr. 50 - 150 m/min depending on a wrapping machine.

In a roll brake shown in figs. 1 and 2, the length of roll jacket 1 exceeds that of pole 3 at each end roughly by a distance that matches the peripheral width of pole 3. Thus, the increase of braking force is roughly directly proportional to the increase of the speed of rotation. However, this correlation is also affected by several other dimensional factors included in a roll brake, as already pointed out above.

If there is only needed a small braking force relative to the diameter and length of a roll jacket, a stator can be designed to be very short and positioned e.g. at just one end of a roll jacket.

A roll brake of the invention can naturally be used also as a separate brake, the same way as currently available brakes. Neither is the invention limited to the above-described applications but the roll brake can also be used in certain conveyor designs.

## Claims

1. A roll brake for braking a film and/or a film roller when pulling a film out of a film roller, the roll brake comprising a hollow cylindrical brake roll (1), which is contacted and partially surrounded by the film to be braked during pulling, and an eddy current brake having a stator (2) and a rotor (1) for braking the brake roll (1), **characterized** in that the stator (2) of the eddy-current brake is built inside the brake roll (1) such that the brake roll (1) itself constitutes the rotor (1) of the eddy current brake (1, 2), whereby a magnetic field generated by said stator induces eddy currents in said brake roll (1) during the rotation thereof by friction between said brake roll and the film.

2. A roll brake as set forth in claim 1, **characterized** in that the brake roll (1) is a steel roll jacket (1) with axial length exceeding its diameter, said brake roll (1) containing a multipolar stator (1) whose poles (3) are provided with excitation windings (4).

3. A roll brake as set forth in claim 1 or 2, **characterized** in that the poles (3)of stator (2) extend in the axial direction of the brake roll (1) to within a distance from the ends of the roll leaving at the ends of the roll (1) a sufficient vacant zone for the passage of eddy currents.

4. A roll brake as set forth in claim 3, **characterized** in that the length of the poles (3) of stator (2) in the axial direction of the brake roll (1) is shorter than the length of the roll by distance which is approximately twice the peripheral width of the pole (3).

5. A roll brake as set forth in any of claims 1-4, **characterized** in that adjacent to the end of the brake roll (1) is mounted a rotation sensor coil (5) which is provided with a voltage produced by a magnetic field induced by eddy currents travelling within the end zone of the roll (1).

6. A roll brake as set forth in any of claims 1-5, **characterized** in that the roll brake, which is surrounded over at least 120° by a film being pulled, is adapted to bear against a film roller (11).

7. A roll brake as set forth in claim 6, **characterized** in that the roll brake bearing pressure against film roller (11) is adapted to be produced by means of a gravity, a centrifugal force or a film tensile force exerted on said roll brake (10).

8. The use of a roll brake as set forth in any of claims 1-7, **characterized** in that the roll brake is employed for wrapping a film (12) around a material, such as a roller of stock (17) to be wrapped.

9. A roll brake as set forth in claim 5, **characterized** in that the magnetization current of stator winding (4) is adapted to be controlled on the basis of control data received from a rotation sensor coil (5).

## Patentansprüche

1. Eine Rollenbremse zum -bremsen einer Folie und/oder einer Folienrolle, wenn die Folie von der Folienrolle abgezogen wird, wobei die Rollenbremse umfaßt:
- eine hohle, zylindrische Bremsrolle (1), die von der Folie kontaktiert und teilweise umgeben ist, die während des Abziehens abgebremst werden soll,
- und eine Wirbelstrombremse, die einen Stator (2) und einen Rotor (1) zum Abbremsen der Bremsrolle (1) besitzt,
dadurch gekennzeichnet, daß der Stator (2) der Wirbelstrombremse in das Innere der Bremsrolle (1) eingebaut ist, und zwar so, daß die Bremsrolle (1) selbst den Rotor (1) der Wirbelstrombremse (1, 2) bildet, wodurch ein magnetisches Feld, das durch den genannten Stator erzeugt wird, aufgrund der Reibung zwischen der Bremsrolle und der Folie in der Bremsrolle (1) während ihrer Rotation Wirbelströme induziert.

2. Rollenbremse nach Anspruch 1, dadurch gekennzeichnet, daß die Bremsrolle (1) ein Rollenmantel (1) aus Stahl ist, dessen axiale Länge seinen Durchmesser übertrifft, und daß die besagte Bremsrolle (1) einen multipolaren Stator (2) umfaßt, dessen Pole (3) mit Erregerwindungen (4) versehen sind.

3. Rollenbremse nach Anspruch 1 oder 2, dadurch gekennzeichnet, daß die Pole (3) des Stators (2) sich in axialer Richtung der Bremsrollen (1) derart erstrecken, daß ein Abstand von den Enden der Rolle verbleibt, so daß an den Enden der Rolle (1) eine ausreichend freie Zone zum Hindurchtreten der Wirbelströme offen bleibt.

4. Rollenbremse nach Anspruch 3, dadurch gekennzeichnet, daß die Länge der Pole (3) des Stators (2) in axialer Richtung der Bremsrolle (1) kürzer ist als die Länge der Rolle, und zwar um eine Distanz, die ungefähr zweimal der peripheren Breite der Pole (3) entspricht.

5. Rollenbremse nach Anspruch 1 - 4, dadurch gekennzeichnet, daß benachbart zum Ende der Bremsrolle (1) eine Rotationssensorspule (5) angebracht ist, die mit einer Spannung versorgt wird, die durch ein magnetisches Feld erzeugt wird, das durch Wirbelströme induziert wird, die durch die Endzone der Rolle (1) wandern.

6. Rollenbremse nach einem der Ansprüche 1 - 5, dadurch gekennzeichnet, daß die Rollenbremse, die um wenigstens 120° durch die abzuziehende Folie umschlungen ist, dazu ausgestattet ist, gegen eine Folienrolle (11) anzudrücken.

7. Rollenbremse nach Anspruch 6, dadurch gekennzeichnet, daß der von der Rollenbremse auf die Folienrolle (11) ausgeübte Druck durch Schwerkraft, Zentrifugalkraft oder durch auf die Rollenbremse (10) ausgeübte Folien-Zugkraft hervorrufbar ist.

8. Verwendung einer Rollenbremse nach einem der Ansprüche 1 - 7, dadurch gekennzeichnet, daß die Rollenbremse dazu eingesetzt wird, eine Folie (12) um ein Material zu wickeln, beispielsweise um eine zu umwickelnde Vorratsrolle (17).

9. Rollenbremse nach Anspruch 5, dadurch gekennzeichnet, daß der Magnetisierungsstrom der Statorwicklung (4) auf der Basis von Steuersignalen bzw. Steuerdaten steuerbar ist, die von einer Rotationssensorspule (5) empfangen werden.

## Revendications

1. Frein de rouleau destiné à freiner un film et/ou une bobine de film lors du déroulage d'un film d'une bobine de film, le frein de rouleau comprenant un tambour de frein cylindrique creux (1), qui est mis en contact avec le film, et entouré en partie par celui-ci, de façon à le freiner pendant la traction, et un frein à courant de Foucault pourvu d'un stator (2) et d'un rotor (1) afin de freiner le tambour de frein (1), caractérisé en ce que le stator (2) du frein à courant de Foucault est construit à l'intérieur du tambour de frein (1) de telle façon que le tambour de frein (1) lui-même constitue le rotor (1) du frein à courant de Foucault (1, 2), ce par quoi un champ magnétique produit par ledit stator induit des courants de Foucault dans ledit tambour de frein (1) pendant sa rotation à l'aide de la friction entre ledit tambour de frein et le film.

2. Frein de rouleau selon la revendication 1, caractérisé en ce que le tambour de frein (1) est un tambour en acier (1) avec une longueur axiale excédent son diamètre, ledit tambour de frein (1) contenant un stator multipolaire (2) dont les pôles (3) sont pourvus d'enroulements d'excitation (4).

3. Frein de rouleau selon les revendications 1 ou 2 caractérisé en ce que les pôles (3) du stator (2) s'étendent dans le sens axial du tambour de frein (1) sur une distance limitée par rapport aux extrémités du rouleau laissant aux extrémités du rouleau (1) une zone vacante suffisante pour le passage des courants de Foucault.

4. Frein de rouleau selon la revendication 3 caractérisé en ce que la longueur des pôles (3) du stator (2) dans le sens axial du tambour de frein (1), est plus courte que la longueur du tambour d'une distance qui est approximativement égale au double de la largeur périphérique du pôle (3).

5. Frein de rouleau selon l'une quelconque des revendications 1 à 4, caractérisé en ce qu'une bobine de détection de rotation (5) est montée de façon adjacente par rapport à l'extrémité du tambour de frein (1), et est alimentée avec une tension produite grâce à un champ magnétique induit par les courants de Foucault circulant à l'intérieur de la zone d'extrémité du tambour (1).

6. Frein de rouleau selon l'une quelconque des revendications 1 à 5, caractérisé en ce que le frein de rouleau, qui est entouré sur au moins 120° par un film qui est tiré, est adapté de façon à appuyer contre un rouleau de film (11).

7. Frein de rouleau selon la revendication 6, caractérisé en ce que la pression d'appui du frein de rouleau contre le rouleau de film (11) peut être produite à l'aide de la gravité, d'une force centrifuge ou d'un effort de tension de film exercé sur ledit frein de rouleau (10).

8. Utilisation d'un frein de rouleau selon l'une quelconque des revendications 1 à 7, caractérisée en ce que le frein de rouleau est utilisé pour enrouler un film (12) autour d'un matériau, tel qu'un rouleau de marchandise (17) à emballer.

9. Frein de rouleau selon la revendication 5, caractérisé en ce que le courant de magnétisation de l'enroulement de stator (4) peut être commandé sur la base d'une donnée de commande reçue par une bobine de détection de vitesse de rotation (5).
